# EUROPEAN PATENT SPECIFICATION

(11) **EP 3 536 102 B1**
(45) Date of publication and mention of the grant of the patent: **20.09.2023**
(21) Application number: 17867618.5
(22) Date of filing: 03.11.2017
(51) Int. Cl.: H04W 74/00, H04W 74/08, H04L 27/26, H04L 5/00

(54) **MESSAGE 3 TRANSMISSION IN RANDOM ACCESS PROCEDURE FOR NR**
NACHRICHT-3-ÜBERTRAGUNG IN EINEM DIREKTZUGRIFFSVERFAHREN FÜR NR
TRANSMISSION DE MESSAGE 3 DANS UNE PROCÉDURE D'ACCÈS ALÉATOIRE DESTINÉE À UN RÉSEAU RADIO

(30) Priority: 04.11.2016 US 201662418091 P
(43) Date of publication of application: 11.09.2019
(73) Proprietor: Apple Inc., Cupertino, CA 95014 (US)
(72) Inventor: XIONG, Gang, Portland, Oregon 97229 (US); CHO, Joonyoung, Santa Clara, California 95050 (US); KWON, Hwan-Joon, Santa Clara, California 95054 (US); HE, Hong, Beijing 100190 (CN); HAN, Seunghee, San Jose, California 95120 (US)
(74) Representative: Lang, Johannes
(86) International application number: PCT/US2017/060010
(87) International publication number: WO 2018/085701

(56) References cited:
- WO-A1-2016/167579
- WO-A1-2016/171765
- WO-A1-2016/171765
- US-A1- 2010 040 001
- US-A1- 2014 112 259
- US-A1- 2016 073 431
- NTT DOCOMO: "Random access procedure for NB-PDSCH", 3GPP DRAFT; R1-161022 RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 14 February 2016 (2016-02-14), XP051054326, Retrieved from the Internet: URL:http://www.3gpp.org/ftp/Meetings_3GPP_ SYNC/RAN1/Docs/ [retrieved on 2016-02-14]
- INTEL CORPORATION: "On Random access for NB-IoT", 3GPP DRAFT; R1-160132 - INTEL NB-IOT RA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 12 January 2016 (2016-01-12), XP051064742, Retrieved from the Internet: URL:http://www.3gpp.org/ftp/tsg_ran/WG1_RL 1/TSGR1_AH/LTE_NB-IoT_1601/Docs/ [retrieved on 2016-01-12]
- Electronicsnotes: "5G Waveforms & Modulation: CPOFDM & DFTsOFDM", , 10 October 1950 (1950-10-10), pages 1-9, XP055840134, Retrieved from the Internet: URL:https://www.electronics-notes.com/arti cles/connectivity/5g-mobile-wireless-cellu lar/waveforms-ofdm-modulation.php [retrieved on 2021-09-13]

## Description

### Priority Claim

This application claims priority to United States Provisional Patent Application Serial No., 62/418,091, filed November 4, 2016.

### Technical Field

Embodiments described herein relate generally to wireless networks and communications systems. Some embodiments relate to cellular communication networks including 3GPP (Third Generation Partnership Project) networks, 3GPP LTE (Long Term Evolution) networks, 3GPP LTE-A (LTE Advanced), and 3GPP fifth generation (5G) or new radio (NR) networks, although the scope of the embodiments is not limited in this respect.

### Background

Mobile wireless communications systems have evolved from early voice-only systems to today's highly sophisticated integrated communication platforms in which fourth generation (4G) LTE networks provide data for massive mobile services. Next generation (a.k.a, fifth generation (5G) or new radio (NR)) technology is being developed to meet the increased future demands brought about by use cases such as enhanced mobile broadband, ultra-reliable and low-latency communications, and machine-to-machine communications for enabling the Internet of Things (IoT). 5G technology builds on a combination of existing 4G and new technologies to meet these demands. A concern of the present disclosure is the manner in which a mobile device initially accesses a 5G or NR network.

3GPP draft R1-161022 by NTT Docomo, titled "Random access procedure for NB-PDSCH", February 14, 2016, relates to subcarrier-spacing of the first UL transmission after the UL random access transmission, i.e., message 3 transmission and the overall random access procedures for NB-IoT. According to the document, both 3.75kHz and 15kHz subcarrier spacing would be supported for message 2 transmission.

### Summary of invention

The invention is defined by the appended claims. The dependent claims define advantageous embodiments.

### Brief Description of the Drawings

FIG. 1 is a block diagram of a radio architecture in accordance with some embodiments.
FIG. 2 illustrates a front-end module circuitry for use in the radio architecture of FIG. 1 in accordance with some embodiments.
FIG. 3 illustrates a radio IC circuitry for use in the radio architecture of FIG. 1 in accordance with some embodiments.
FIG. 4 illustrates a baseband processing circuitry for use in the radio architecture of FIG.1 in accordance with some embodiments.
FIG. 5 illustrates an example of a computing machine such as an evolved Node B (eNB) or next generation evolved node B (gNB) according to some embodiments.
FIG. 6 illustrates an example of a user equipment (UE) device according to some embodiments.
FIG. 7 illustrates an example UE and a base station (BS) such as an eNB or gNB according to some embodiments.
FIG. 8 illustrates an example of multiple partitions in the unified NR framework according to some embodiments.
FIG. 9 illustrates an example of a random access procedure for obtaining initial access to an NR network according to some embodiments.
FIG. 10 illustrates one example of transmission bandwidth for message 3 of the random access procedure according to some embodiments.
FIG. 11 illustrates an example of a self-contained time-division duplex (TDD) subframe structure according to some embodiments.
FIG. 12 illustrates an example configuration for the starting and end symbols for the physical uplink shared channel (PUSCH) transmission that carries message 3 according to some embodiments.

### Detailed Description

The next generation wireless communication system, 5G or new radio (NR), will provide access to information and sharing of data anywhere, anytime by various users and applications. NR is expected to be a unified network/system that supports vastly different and sometime conflicting performance dimensions and services. Such diverse multi-dimensional requirements are driven by different services and applications. To meet these requirements, NR provides for flexible resource allocations with respect to the waveform used to transmit data, waveform numerology, transmission bandwidth, and transmission duration.

In NR and LTE, a mobile terminal is referred to as user equipment (UE). A base station is referred to as an evolved Node B (eNB) in LTE and as a next generation eNB (gNB) in NR. In order for an NR UE to obtain initial access to the network and acquire uplink (UL) and downlink (DL) resources from the gNB, the UE performs a contention-based random access channel (RACH) procedure (also referred to simply as a random access procedure) that comprises four stages designated as messages 1 through 4. The RACH procedure is described in more detail below. As mentioned above, an NR UE may support multiple numerologies, different waveforms, and potential UE-specific transmission bandwidths and durations for uplink transmissions. In the four stage RACH procedure, message 3 is the first uplink transmission that carries the data payload. Hence, certain mechanisms are needed to align the transmission scheme between the UE and the gNB for message 3 with respect to numerology, waveform, transmission bandwidth, and transmission duration to allow the gNB to properly decode the message 3. Described herein are mechanisms that provide such transmission scheme alignments. In certain embodiments, the UE is configured to use a particular specified transmission scheme for one or more of the stages of the RACH procedure. In other embodiments, mechanisms are provided for the gNB to communicate to the UE which transmission scheme to use for a particular stage of the RACH procedure. The embodiments may also be combined so that the UE uses a specified transmission scheme for one or more stages of the RACH procedure and a transmission scheme as communicated by the gNB for one or more other stages.

### Example Radio Architecture

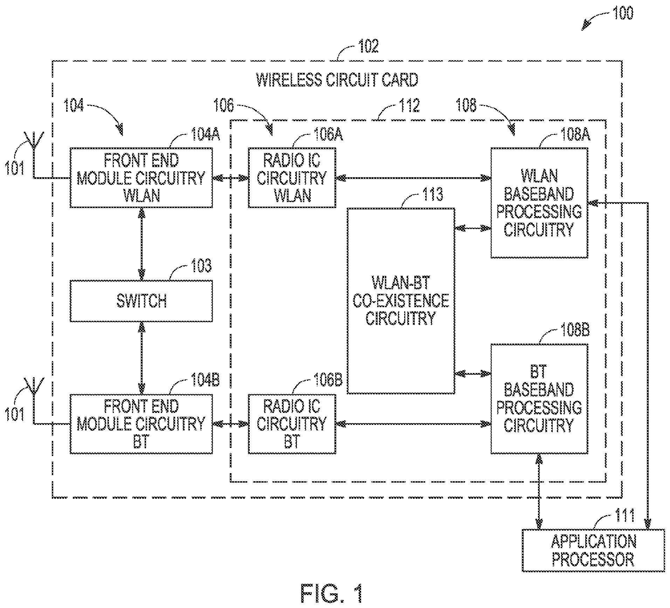

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104B may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 102, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM 104A and FEM 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106a may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry, and may further interface with application processor 110 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM 104A or 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or integrated circuit (IC), such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, 802.1 1n-2009, IEEE 802.11-2012, 802.11n-2009, 802.11ac, and/or 802.11ax standards and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi (HEW) communications in accordance with the IEEE 802.11ax standard. In these embodiments, the radio architecture 100 may be configured to communicate in accordance with an OFDMA technique, although the scope of the embodiments is not limited in this respect.

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in Fig. 1, the radio architecture 100 may be configured to establish a BT synchronous connection oriented (SCO) link and or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards

In some embodiments, the radio-architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, SMHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies however.

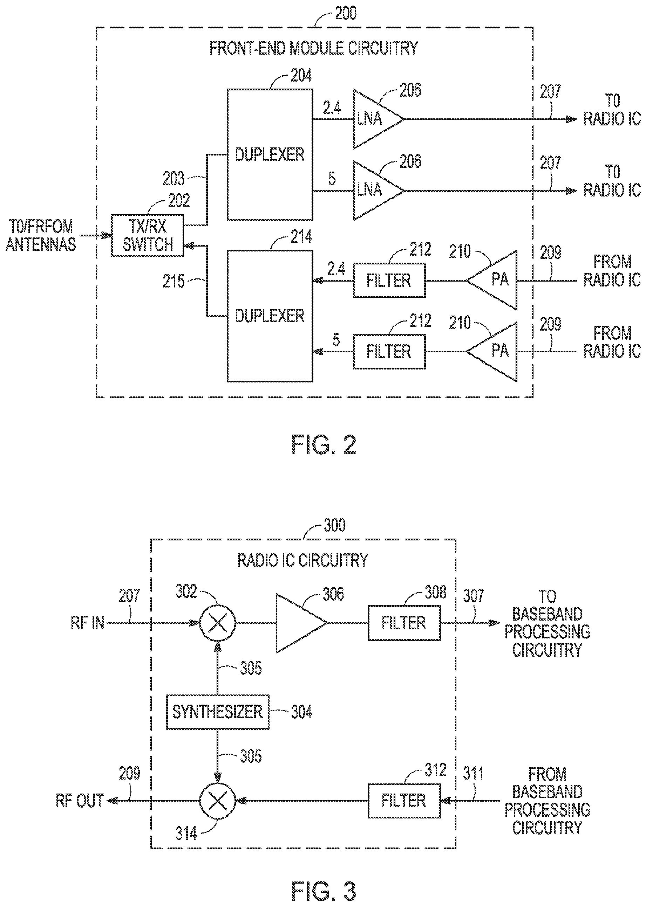

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG.1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

FIG. 3 illustrates radio IC circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation FIG. 3 illustrates only a simplified version of a radio IC circuitry, and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety degree time-varying LO switching signals provided by a quadrature circuitry which may be configured to receive a LO frequency (f_{LO}) from a local oscillator or a synthesizer, such as LO frequency 305 of synthesizer 304 (FIG.3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-nose amplifier, such as amplifier circuitry 306 (FIG. 3) or to filter circuitry 308 (FIG. 3).

In some embodiments, the output baseband signals 307 and the input baseband signals 311 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or the application processor 110 (FIG. 1) depending on the desired output frequency 305. In some embodiments, a divider control input (e.g., N) may be determined from a look-up table (e.g., within a Wi-Fi card) based on a channel number and a channel center frequency as determined or indicated by the application processor 110.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (f_{LO}).

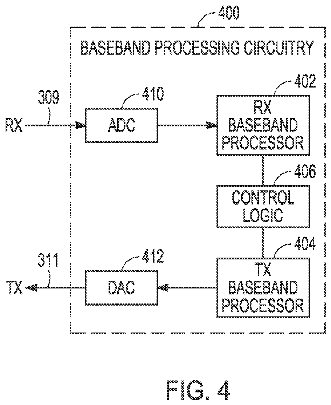

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG.1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processor 108a, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1, in some embodiments, the antennas 101 (FIG.1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio-architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

### Example Machine Description

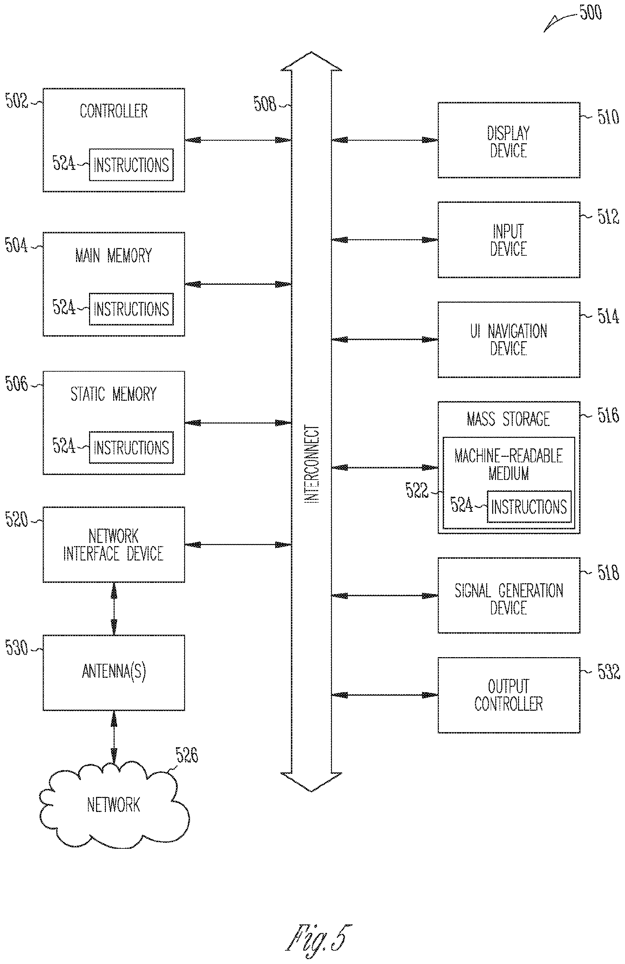

FIG. 5 illustrates a block diagram of an example machine 500 upon which any one or more of the techniques (e.g., methodologies) discussed herein may performed. In alternative embodiments, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environment. The machine 500 may be a user equipment (UE), evolved Node B (eNB), next generation evolved Node B (gNB), next generation access network (AN), next generation user plane function (UPF), Wi-Fi access point (AP), Wi-Fi station (STA), personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 500 may include a hardware processor 502 (e.g., a central processing unit (CPU), a graphics processing unit (GPU), a hardware processor core, or any combination thereof), a main memory 504 and a static memory 506, some or all of which may communicate with each other via an interlink (e.g., bus) 508. The machine 500 may further include a display unit 510, an alphanumeric input device 512 (e.g., a keyboard), and a user interface (UI) navigation device 514 (e.g., a mouse). In an example, the display unit 510, input device 512 and UI navigation device 514 may be a touch screen display. The machine 500 may additionally include a storage device (e.g., drive unit) 516, a signal generation device 518 (e.g., a speaker), a network interface device 520, and one or more sensors 521, such as a global positioning system (GPS) sensor, compass, accelerometer, or other sensor. The machine 500 may include an output controller 528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 516 may include a machine readable medium 522 on which is stored one or more sets of data structures or instructions 524 (e.g., software) embodying or utilized by any one or more of the techniques or functions described herein. The instructions 524 may also reside, completely or at least partially, within the main memory 504, within static memory 506, or within the hardware processor 502 during execution thereof by the machine 500. In an example, one or any combination of the hardware processor 502, the main memory 504, the static memory 506, or the storage device 516 may constitute machine readable media.

While the machine readable medium 522 is illustrated as a single medium, the term "machine readable medium" may include a single medium or multiple media (e.g., a centralized or distributed database, and/or associated caches and servers) configured to store the one or more instructions 524.

The term "machine readable medium" may include any medium that is capable of storing, encoding, or carrying instructions for execution by the machine 500 and that cause the machine 500 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 524 may further be transmitted or received over a communications network 526 using a transmission medium via the network interface device 520 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 520 may include one or more physical jacks (e.g., Ethernet, coaxial, or phone jacks) or one or more antennas to connect to the communications network 526. In an example, the network interface device 520 may include a plurality of antennas to wirelessly communicate using at least one of single-input multiple-output (SIMO), multiple-input multiple-output (MIMO), or multiple-input single-output (MISO) techniques. In some examples, the network interface device 520 may wirelessly communicate using Multiple User MIMO techniques. The term "transmission medium" shall be taken to include any intangible medium that is capable of storing, encoding, or carrying instructions for execution by the machine 500, and includes digital or analog communications signals or other intangible medium to facilitate communication of such software.

### Example UE Description

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

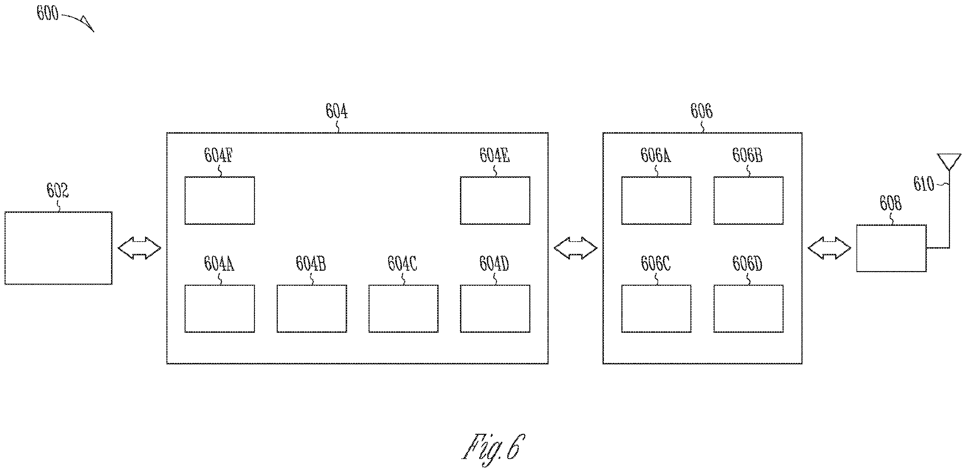

Embodiments described herein may be implemented into a system using any suitably configured hardware and/or software. FIG. 6 illustrates, for one embodiment, example components of a User Equipment (UE) device 600. In some embodiments, the UE device 600 may include application circuitry 602, baseband circuitry 604, Radio Frequency (RF) circuitry 606, front-end module (FEM) circuitry 608 and one or more antennas 610, coupled together at least as shown.

The application circuitry 602 may include one or more application processors. For example, the application circuitry 602 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 604 may include circuitry such as, but not limited to, one or more single-core or multi-core processors. The baseband circuitry 604 may include one or more baseband processors and/or control logic to process baseband signals received from a receive signal path of the RF circuitry 606 and to generate baseband signals for a transmit signal path of the RF circuitry 606. Baseband processing circuity 604 may interface with the application circuitry 602 for generation and processing of the baseband signals and for controlling operations of the RF circuitry 606. For example, in some embodiments, the baseband circuitry 604 may include a second generation (2G) baseband processor 604a, third generation (3G) baseband processor 604b, fourth generation (4G) baseband processor 604c, and/or other baseband processor(s) 604d for other existing generations, generations in development or to be developed in the future (e.g., fifth generation (5G), 6G, etc.). The baseband circuitry 604 (e.g., one or more of baseband processors 604a-d) may handle various radio control functions that enable communication with one or more radio networks via the RF circuitry 606. The radio control functions may include, but are not limited to, signal modulation/demodulation, encoding/decoding, radio frequency shifting, etc. In some embodiments, modulation/demodulation circuitry of the baseband circuitry 604 may include Fast-Fourier Transform (FFT), precoding, and/or constellation mapping/demapping functionality. In some embodiments, encoding/decoding circuitry of the baseband circuitry 604 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 604 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 604e of the baseband circuitry 604 may be configured to run elements of the protocol stack for signaling of the PHY, MAC, RLC, PDCP and/or RRC layers. In some embodiments, the baseband circuitry may include one or more audio digital signal processor(s) (DSP) 604f. The audio DSP(s) 604f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 604 and the application circuitry 602 may be implemented together such as, for example, on a system on a chip (SOC).

In some embodiments, the baseband circuitry 604 may provide for communication compatible with one or more radio technologies. For example, in some embodiments, the baseband circuitry 604 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 604 is configured to support radio communications of more than one wireless protocol may be referred to as multi-mode baseband circuitry.

RF circuitry 606 may enable communication with wireless networks using modulated electromagnetic radiation through a non-solid medium. In various embodiments, the RF circuitry 606 may include switches, filters, amplifiers, etc. to facilitate the communication with the wireless network. RF circuitry 606 may include a receive signal path which may include circuitry to down-convert RF signals received from the FEM circuitry 608 and provide baseband signals to the baseband circuitry 604. RF circuitry 606 may also include a transmit signal path which may include circuitry to up-convert baseband signals provided by the baseband circuitry 604 and provide RF output signals to the FEM circuitry 608 for transmission.

In some embodiments, the RF circuitry 606 may include a receive signal path and a transmit signal path. The receive signal path of the RF circuitry 606 may include mixer circuitry 606a, amplifier circuitry 606b and filter circuitry 606c. The transmit signal path of the RF circuitry 606 may include filter circuitry 606c and mixer circuitry 606a. RF circuitry 606 may also include synthesizer circuitry 606d for synthesizing a frequency for use by the mixer circuitry 606a of the receive signal path and the transmit signal path. In some embodiments, the mixer circuitry 606a of the receive signal path may be configured to down-convert RF signals received from the FEM circuitry 608 based on the synthesized frequency provided by synthesizer circuitry 606d. The amplifier circuitry 606b may be configured to amplify the down-converted signals and the filter circuitry 606c may be a low-pass filter (LPF) or band-pass filter (BPF) configured to remove unwanted signals from the down-converted signals to generate output baseband signals. Output baseband signals may be provided to the baseband circuitry 604 for further processing. In some embodiments, the output baseband signals may be zero-frequency baseband signals, although this is not a requirement. In some embodiments, mixer circuitry 606a of the receive signal path may comprise passive mixers, although the scope of the embodiments is not limited in this respect.

In some embodiments, the mixer circuitry 606a of the transmit signal path may be configured to up-convert input baseband signals based on the synthesized frequency provided by the synthesizer circuitry 606d to generate RF output signals for the FEM circuitry 608. The baseband signals may be provided by the baseband circuitry 604 and may be filtered by filter circuitry 606c. The filter circuitry 606c may include a low-pass filter (LPF), although the scope of the embodiments is not limited in this respect.

In some embodiments, the mixer circuitry 606a of the receive signal path and the mixer circuitry 606a of the transmit signal path may include two or more mixers and may be arranged for quadrature downconversion and/or upconversion respectively. In some embodiments, the mixer circuitry 606a of the receive signal path and the mixer circuitry 606a of the transmit signal path may include two or more mixers and may be arranged for image rejection (e.g., Hartley image rejection). In some embodiments, the mixer circuitry 606a of the receive signal path and the mixer circuitry 606a may be arranged for direct downconversion and/or direct upconversion, respectively. In some embodiments, the mixer circuitry 606a of the receive signal path and the mixer circuitry 606a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 606 may include analog-to-digital converter (ADC) and digital-to-analog converter (DAC) circuitry and the baseband circuitry 604 may include a digital baseband interface to communicate with the RF circuitry 606.

In some dual-mode embodiments, a separate radio IC circuitry may be provided for processing signals for each spectrum, although the scope of the embodiments is not limited in this respect.

In some embodiments, the synthesizer circuitry 606d may be a fractional-N synthesizer or a fractional N/N+1 synthesizer, although the scope of the embodiments is not limited in this respect as other types of frequency synthesizers may be suitable. For example, synthesizer circuitry 606d may be a delta-sigma synthesizer, a frequency multiplier, or a synthesizer comprising a phase-locked loop with a frequency divider.

The synthesizer circuitry 606d may be configured to synthesize an output frequency for use by the mixer circuitry 606a of the RF circuitry 606 based on a frequency input and a divider control input. In some embodiments, the synthesizer circuitry 606d may be a fractional N/N+1 synthesizer.

In some embodiments, frequency input may be provided by a voltage controlled oscillator (VCO), although that is not a requirement. Divider control input may be provided by either the baseband circuitry 604 or the applications processor 602 depending on the desired output frequency. In some embodiments, a divider control input (e.g., N) may be determined from a look-up table based on a channel indicated by the applications processor 602.

Synthesizer circuitry 606d of the RF circuitry 606 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 606d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 606 may include an IQ/polar converter.

FEM circuitry 608 may include a receive signal path which may include circuitry configured to operate on RF signals received from one or more antennas 610, amplify the received signals and provide the amplified versions of the received signals to the RF circuitry 606 for further processing. FEM circuitry 608 may also include a transmit signal path which may include circuitry configured to amplify signals for transmission provided by the RF circuitry 606 for transmission by one or more of the one or more antennas 610.

In some embodiments, the FEM circuitry 608 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 606). The transmit signal path of the FEM circuitry 608 may include a power amplifier (PA) to amplify input RF signals (e.g., provided by RF circuitry 606), and one or more filters to generate RF signals for subsequent transmission (e.g., by one or more of the one or more antennas 610.

In some embodiments, the UE device 600 may include additional elements such as, for example, memory/storage, display, camera, sensor, and/or input/output (I/O) interface.

### Descriptions of Embodiments

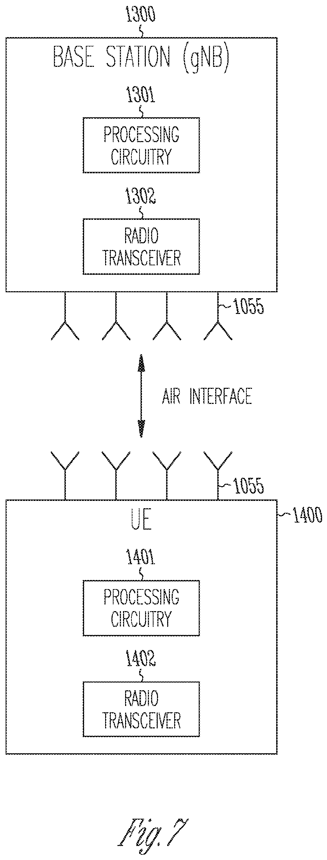

In Long Term Evolution (LTE) and 5G systems, a mobile terminal (referred to as a User Equipment or UE) connects to the cellular network via a base station (BS), referred to as an evolved Node B or eNB in LTE systems and as a next generation evolved Node B or gNB in 5G or NR systems. FIG. 7 illustrates an example of the components of a UE 1400 and a base station (e.g., eNB or gNB) 1300. The BS 1300 includes processing circuitry 1301 connected to a radio transceiver 1302 for providing an air interface. The UE 1400 includes processing circuitry 1401 connected to a radio transceiver 1402 for providing an air interface over the wireless medium. Each of the transceivers in the devices is connected to antennas 1055. The memory and processing circuitries of the UE and/or BS may be configured to perform the functions and implement the schemes of the various embodiments described herein.

The air interface for NR and LTE, also referred to as the radio interface or radio access network (RAN), has a layered protocol architecture where peer layers of the UE and gNB pass protocol data units (PDUs) between each other that are encapsulated service data units (SDUs) of the next higher layer. The topmost layer in the user plane is the packet data compression protocol (PDCP) layer that transmits and receives IP (internet protocol) packets. The topmost layer of the control plane in the access stratum between the UE and gNB is the radio resource control (RRC) layer. The PDCP layer communicates with the radio link control (RLC) layer via radio bearers to which IP packets are mapped. At the medium access control (MAC) layer, the connection to the RLC layer above is through logical channels, and the connection to the physical layer below is through transport channels. The primary UL transport channel is the uplink shared channel (LTL-SCH), and the primary DL transport channel is the downlink shared channel (DL-SCH). Another DL transport channel, the broadcast channel (BCH), is used by the gNB to broadcast system information. At the physical layer, the UL-SCH is associated with the physical uplink shared channel (PUSCH), the DL-SCH is associated with the physical downlink shared channel (PDSCH), and the BCH is associated with the physical broadcast channel (PBCH). The physical layer is referred to as layer 1 or L1. The MAC, RLC, and PDCP layers are referred to as layer 2 or L2. The RRC layer, as well as the non-access stratum (NAS) layer between the UE and the core network in the control plane and user applications in the user plane, are referred to layer 3 or L3.

Data on a transport channel is organized into transport blocks. In each transmission time interval (TTI), at most one transport block of dynamic size is transmitted over the radio interface to/from a device in the absence of spatial multiplexing. In the case of spatial multiplexing (MIMO), there can be up to two transport blocks per TTI. Among other things, the MAC layer provides functionality for performing the random access procedure as described below.

The waveform used in NR is cyclic prefix orthogonal frequency division multiplexing (CP-OFDM) for the downlink (DL) and either CP-OFDM or discrete Fourier transform spread OFDM (DFT-s-OFDM) for the uplink (UL). The CP-OFDM waveform can be can be used for single-stream and multi-stream (i.e., MIMO) transmissions, while the DFT-s-OFDM based waveform is limited to single-stream transmissions only (targeting cases with a limited link budget). The NR specifications make it mandatory for UEs to support both CP-OFDM and DFT-s-OFDM, where the gNB may communicate to the UE which of the CP-OFDM or DFT-s-OFDM waveforms the UE is to use for UL transmissions. Both of the CP-OFDM and DFT-s-OFDM waveforms may have variable numerologies (e.g., subcarrier spacing and symbol duration).

NR supports both frequency division duplex and time division duplex modes to separate UL transmissions from DL transmissions. The downlink and uplink transmissions are organized into radio frames each having a duration of 10 ms, and each radio frame consists of 10 subframes of 1 ms each. Each subframe contains a variable number of slots (e.g., either 7 or 14), and each slot contains a variable number of OFDM symbols depending upon the numerology and slot configuration. Data is encoded into by an inverse DFT into frequency-domain symbols that are transmitted as time-frequency resources. Each such time-frequency resource corresponds to a particular subcarrier of a particular OFDM symbol, referred to as a resource element (RE).

When a UE is in an RRC connected state, all uplink and downlink resources are allocated by the gNB. At the physical level, those resources are segregated into separate physical channels. The gNB grants uplink resources over the PUSCH and downlink resources over the PDSCH using the physical downlink control channel (PDCCH), where an individual control message is referred to as downlink control information (DCI). A CRC (cyclic redundancy check) is attached to each DCI message payload. The identity of the terminal (or terminals) for which the DCI is intended is specified by a radio network temporary identifier (RNTI) that is included in the CRC calculation and not explicitly transmitted. Depending on the purpose of the DCI, different RNTIs are used, such as the terminal-specific C-RNTI (cell RNTI) for normal unicast data transmission. A terminal searches the received PDCCH for DCIs addressed to it by checking the CRCs using its set of assigned RNTIs. The terminal blindly decodes the PDCCH by searching elements of the PDCCH in a search space that includes a common search space (CSS) that all terminals search and may also include a terminal specific search space. The UE is allocated resources in the physical uplink control channel (PUCCH) for requesting resources for transmitting data to the eNB over the PUSCH. If the UE has not been allocated resources on the PUCCH for transmitting such a scheduling request, the UE may use a random access procedure for the scheduling request.

To initially access the network, the UE performs a contention-based random access channel (RACH) procedure. In order to perform the RACH procedure, the UE first needs to: 1) find and acquire synchronization to a cell within the network, and 2) receive and decode the information, referred to as the cell system information, needed to communicate with and operate properly within the cell. To assist in cell search and synchronization, two special signals are transmitted by the gNB: the primary synchronization signal (PSS) and the secondary synchronization signal (SSS). System information is delivered by two different mechanisms relying on two different transport channels. In LTE, a portion of the system information is transmitted in the form of a master information block (MIB) using the BCH and PBCH, while the main part of the system information is transmitted in the form of system information blocks (SIBs) over the DL-SCH and PDSCH. In NR, a portion of the system information is transmitted as the minimum system information (MSI) using the BCH and PBCH, and the other system information is transmitted as the remaining minimum system information (RMSI) and other system information (OSI) over the DL-SCH and PDSCH. In an LTE or NR system, specific time-frequency resources are reserved for use by UEs in performing the RACH procedure, referred to as the physical random access channel (PRACH). The location of the PRACH in the time-frequency grid is broadcast to UEs in an SIB for LTE and as RSMI in NR.

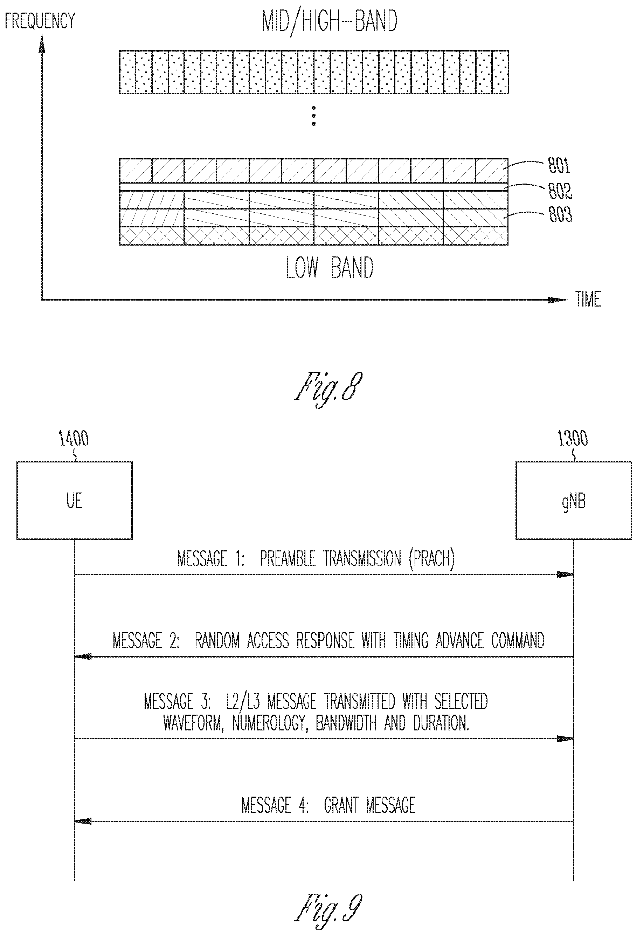

NR defines a unified framework with flexible resource allocations for the support of diverse requirements, applications and services, multiple frequency bands, multiple application/services, licensed/unlicensed frequency, and multiple partitions. FIG. 8 illustrates such a unified framework for NR with multiple partitions. Multiple partitions or applications in different or same frequency resource or frequency bands can be multiplexed in either time-division multiplexing (TDM), frequency-division multiplexing (FDM), code-division multiplexing (CDM) manner or a combination thereof. FIG. 8 shows a short transmission time interval (TTI) partition 801 (such as may be used for mission critical machine-type communications (MTC), a long TTI partition 802 (such as may be used for massive MTC, and a normal TTI partition 803 (such as may be used for mobile broadband). Also, different partitions may employ different subcarrier spacings (i.e., different numerologies) for the CP-OFDM or DFT-s-OFDM waveforms that can be tailored for different applications and use cases.

Fig. 9 illustrates the stages of a contention-based RACH procedure for obtaining initial according to some embodiments. The RACH procedure begins when the UE 1400, after acquiring synchronization and system information, transmits a random access preamble on the physical random access channel (PRACH) to the gNB 1300, referred to as message 1. The preamble transmission indicates to the gNB the presence of a LTE performing a random access procedure and also allows the gNB to estimate the transmission delay between the UE and gNB for adjusting the uplink timing. The gNB responds with a random access response (RAR) over the PDCCH, referred to as message 2, using a random access-RNTI (RA-RNTI) to address the UE. Message 2 also includes a timing advance command. The UE expects to receive the RAR within a time window, of which the start and end are configured bv the sNB via a system information block (SIB) for LTE and as RMSI for NR. The RA-RNTI may be derived from the specific time-frequency resources that the UE selects for transmitting message 1. The UE then transmits an L2/L3 message with adjusted timing, referred to as message 3, to the gNB using a PUSCH resource assigned to the UE by message 2. Message 3 includes a UE identification as well as other content such as an RRC connection request. Message 3 may transmitted with a waveform, numerology, transmission bandwidth, and transmission duration selected in accordance with the different embodiments described herein. The gNB then transmits a grant message referred to as message 4 to the UE that resolves any contention due to multiple UEs performing a random access procedure using the same preamble and receiving the same random access response from the gNB. If the random access procedure is successful, the UE is granted uplink resources.

Described herein in various embodiments are ways of indicating to the UE the transmission scheme to be used for message 3 transmission in the RACH procedure for NR. For example, the transmission scheme for NR physical uplink shared channel (NR PUSCH) carrying message 3 in random access procedure may be configured by higher layer signaling or dynamically indicated in the UL grant carried by the random access response (RAR), where the transmission scheme includes one or more of a waveform, waveform numerology, transmission bandwidth, and transmission duration. The UE then transmits the PUSCH that carries message 3 in the random access procedure according to the configured transmission scheme.

### Waveform indication

Different embodiments for indicating whether CP-OFDM or DFT-s-OFDM is to be used as the waveform for message 3 transmission are described as follows. In one embodiment, the indication of CP-OFDM and DFT-s-OFDM for message 3 transmission is included in the NR minimum system information (MSI), NR remaining minimum system information (RMSI), NR other system information (OSI). After decoding the MSI, RMSI or OSI, the UE can transmit the message 3 according to the configured waveform. In another option, the waveform to be used for the transmission of message 3 can be dynamically indicated in the UL grant carried by RAR message in RACH procedure.

In a non-claimed embodiment, one of the waveforms, CP-OFDM or DFT-s-OFDM can be predefined in the specification for message 3 transmission. For instance, given that DFT-s-OFDM based waveform can be targeted for UE in coverage limited condition (due to its low peak-to-average power ratio (PAPR)), it can be defined as default for message 3 transmission. After radio resource control (RRC) signaling, the gNB may then configure the appropriate waveform for UL data transmission after initial access.

In another embodiment, the UE first determines its coverage status by measuring the path loss from the gNB to the UE based upon the synchronization or other signals broadcast by the gNB. The UE transmits message 1 of the RACH procedure using a selected PRACH resource to indicate the UE's coverage status to the gNB. In one option, the waveform used for message 3 would then be selected by the gNB and communicated to the UE via message 2. In another non-claimed option, the waveform for message 3 would be selected by the UE from a predefined association between different coverage levels and the waveform that should be used for message 3. The PRACH resources with different coverage levels may be resources multiplexed with time division multiplexing (TDM), frequency division multiplexing (FDM) and/or code division multiplexing (CDM), from a plurality of preamble sequences, or from a combination thereof. The resource partition can be predefined or configured by higher layers and communicated to the UE via transmission of system information (e.g., MSI, RMSI or OSI) or via RRC signaling. In one option, one or a plurality of signature sequences can be reserved for the PRACH to identify a particular coverage level. In another option, one or a plurality of frequency resources can be allocated for the PRACH to identify a particular coverage level. In another option, one or a plurality of time resources can be allocated for NR PRACH to identify a particular coverage level. For instance, the PRACH for a UE in a good coverage can be transmitted in one or a multiple of subframes 0, 2, 4, 6, 8 within one frame while NR PRACH for UE in a bad coverage can be transmitted in one or a multiple of subframes 1, 3, 5, 7, 9. Yet in another option, a combination of TDM and/or FDM and/or CDM based multiplexed schemes can be used to separate different PRACH resources identifying different coverage levels. In another option, one or a plurality of preamble sequences can be allocated for transmitting over the PRACH in message 1 to identify a particular coverage level.

In the option discussed above where the UE transmits message 3 using a waveform associated with its coverage status, the selected waveform would be expected by the gNB based on the communication of the coverage status to the gNB from the UE via the choice of PRACH resource and based upon the known association between the coverage status and one the waveforms. In the other option discussed above, upon successful detection of message 1 on the selected PRACH resource (e.g., where the resource may defined with respect to time, frequency, code sequence, and/or preamble sequence, the gNB is able know the coverage status and whether CP-OFDM or DFT-s-ODFM based waveform should be used for message 3 transmission. In this case, gNB may inform UE via the random access response (i.e., message 2) the indication of either the CP-OFDM or DFT-s-OFDM waveform to be used for message 3 transmission. For example, a one bit indication can be included in the UL grant carried by RAR message.

The waveform used for message 3 transmission may have a 1:1 or any predefined association with the resource used for PRACH transmission. For instance, when the path loss is below a certain threshold, the UE may transmit the PRACH in resource group A. Given that UE may be in a good coverage, then the UE may transmit the message 3 using a CP-OFDM based waveform. When the path loss is above a threshold, the UE may transmit the PRACH in resource group B and then indicated that message 3 is to use a DFT-s-OFDM based waveform. The threshold may be predefined in the specification or configured by higher layers via the MSI, RMSI or OSI or via UE-specific signaling in an RRC connected state.

### Numerology indication

With respect to the numerology to use for message 3 transmission, the same mechanisms discussed above for waveform indication can be applied to numerology indication. For example, in one option, the numerology for message 3 transmission can be predefined in the specification or the gNB may broadcast this information in the MSI, RMSI or OSI or via UE specific signaling in an RRC connected state. The UE would transmit message 3 according to the configured numerology. Alternatively, the numerology for the transmission of message 3 can be made to be the same as the numerology used for the transmission of one of the following physical channel or signals: PSS, SSS, PBCH, or the PDCCH/PDSCH used for the scheduling and transmission of the MSI, RMSI, OSI or RAR message In another option, the numerology used for the transmission of message 3 can be dynamically indicated in the UL grant carried by RAR message in RACH procedure.

### Transmission bandwidth

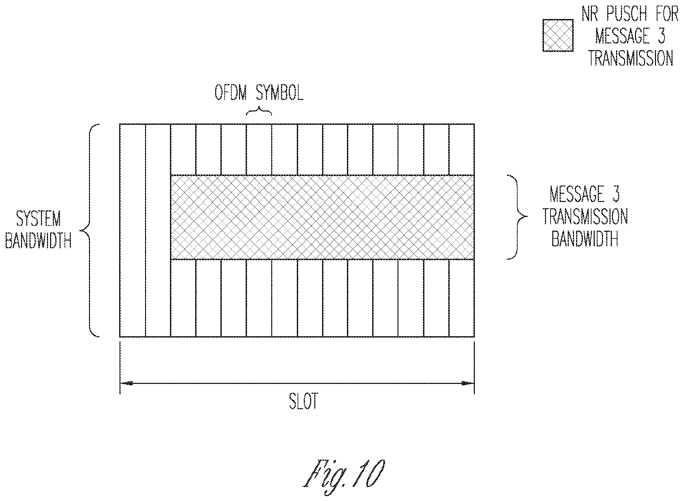

Given that UE may have different UL transmission bandwidths, e.g., depending on UE capability, UE may transmit the message 3 within a limited bandwidth, which may be smaller than system bandwidth. Note that for message 3 transmission, gNB may not know the UE capability and thus may not know UE specific transmission bandwidth. To allow alignment between the gNB and UE, a common transmission bandwidth may be defined in a cell or group specific manner for message 3 transmission. FIG. 10 illustrates one example of transmission bandwidth for message 3. In one embodiment, the common transmission bandwidth information may be predefined in the specification or configured by higher layers via the MSI, RMSI or OSI or via UE-specific signaling. In another option, the transmission bandwidth used for the transmission of message 3 can be dynamically indicated in the UL grant carried by RAR message in RACH procedure.

In another embodiment, the common transmission bandwidth for message 3 transmission may be associated with the transmission resource or bandwidth for the PSS, SSS, PBCH or PRACH transmission. In another embodiment, the common transmission bandwidth may be defined separately for different carrier frequencies or applications. For instance, for a carrier frequency below 6 GHz, a small transmission bandwidth may be defined, while for a carrier frequency above 6 GHz, a large transmission bandwidth may be defined.

### Transmission duration

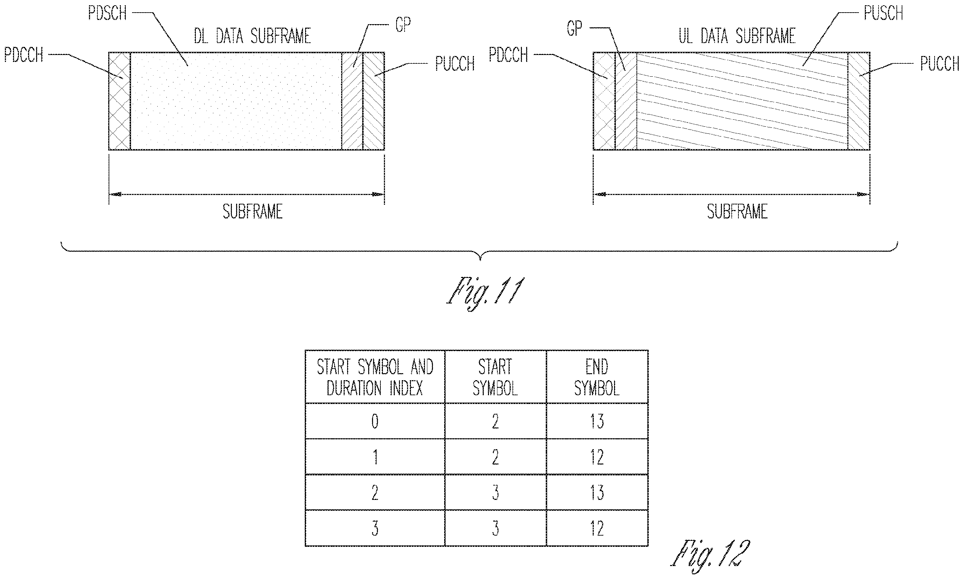

To enable low latency transmission for enhanced mobile broadband communication, a self-contained TDD subframe structure is introduced in NR wherein DL. FIG. 11 illustrates examples of a self-contained TDD DL data subframe structure and a self-contained UL data subframe where both subframes include both DL and UL channels in one subframe. In order to accommodate the DL to LTL and UL to DL switching time and round-trip propagation delay, a guard period (GP) is inserted between the PDSCH and the PUCCH in the DL data subframe and between the PDCCH and the PUSCH in the UL data subframe. For the DL self-contained subframe structure, the PDSCH is scheduled by the PDCCH and is transmitted right after the PDCCH. For message 3 transmission, the PUSCH transmission duration including the starting and end symbol within one slot needs to be aligned between the gNB and UE to allow proper decoding.

In one option, the starting and/or end symbol of the PUSCH transmission carrying message 3 can be predefined in the specification or configured by higher layers via the MSI, RMSI or OSI or via UE-specific signaling. Alternatively, the starting and/or end symbol of the PUSCH transmission carrying message 3 can be dynamically indicated in the UL grant carried by the RAR (i.e., message 2) of the RACH procedure.

FIG. 12 is a table that shows one example of configuration for the starting and end symbol for PUSCH transmission carrying message 3. As a further extension, a set of the starting and/or end symbol can be configured by higher layers via the MSI, RMSI or OSI, or a field (e.g., one-bit) in the UL grant carried by RAR message can be used to indicate which starting and/or end symbol is used from the set of the start and/or end symbols for the PUSCH transmission for message 3. For different duplex modes, the PUSCH duration for message 3 transmission may be independently defined or configured. For instance, for FDD system, the starting symbol can be fixed to the first symbol, while for TDD system, the starting symbol can be semi-statically configured by higher layers including the MSI, RMSI or OSI and RRC signaling.

### Content in message 3

For message 3 and message 4 transmission, hybrid automatic repeat request (HARQ) operation may be used to improve the reliability of the UL and DL transmission. For the message 4 transmission in the DL, the gNB may need to indicate the resource for HARQ-ACK feedback from UE. Given that the PUCCH can be transmitted with short duration or long duration in NR, the UE may transmit certain information including a reference signal received power (RSRP) measurement or other coverage status via message 3 to allow the gNB to allocate the proper amount of resource for the PUCCH transmission which carries HARQ-ACK feedback for the corresponding message 4. In one option, a new Logical Channel ID (LCID) in the MAC header and corresponding MAC control element (CE) may be defined to carry information for UE coverage status. To trigger the transmission of this MAC CE, and indication (e.g., one bit) may be included in the UL grant in the RAR message. In another option, if coverage status is carried by a small number of information bits, (e.g., one-bit), a cyclic redundancy check (CRC) mask with the codeword corresponding to the coverage status may be employed for message 3 transmission.

### Indication of waveform for UL data transmission

Since the UE needs to support both CP-OFDM and DFT-s-OFDM waveform for UL transmission, an embodiment for indication of waveform to be used for UL data transmission can be provided as follows: In the claimed embodiment, the indication of CP-OFDM or DFT-s-OFDM waveform for UL data transmission can be configured by higher layers via RRC signaling. In another non-claimed embodiment, the indication of CP-OFDM or DFT-s-OFDM waveform for UL data transmission can be implicitly signaled in the DCI for UL grant. In one example, the waveform to be used for UL data transmission can be associated with the modulation and channel coding (MCS) and/or MIMO scheme. In another example, different resource allocation types can be defined for UL data transmission where a particular waveform may be associated with a particular resource allocation type. For instance, when resource allocation type 1 is indicated in the DCI for UL grant, CP-OFDM based waveform is used for uplink data transmission; while when resource allocation type 2 is indicated in the UL grant, DFT-s-OFDM based waveform is used for uplink data transmission.

### Additional Notes

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in a number of environments such as part of a wireless local area network (WLAN), 3rd Generation Partnership Project (3GPP) Universal Terrestrial Radio Access Network (UTRAN), or Long-Term-Evolution (LTE) or a Long-Term-Evolution (LTE) communication system, although the scope of the disclosure is not limited in this respect. An example LTE system includes a number of mobile stations, defined by the LTE specification as User Equipment (UE), communicating with a base station, defined by the LTE specifications as an eNodeB.

Antennas referred to herein may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, antennas may be effectively separated to take advantage of spatial diversity and the different channel characteristics that may result between each of antennas and the antennas of a transmitting station. In some MIMO embodiments, antennas may be separated by up to 1/10 of a wavelength or more.

In some embodiments, a receiver as described herein may be configured to receive signals in accordance with specific communication standards, such as the Institute of Electrical and Electronics Engineers (IEEE) standards including IEEE 802.11-2007 and/or 802.11(n) standards and/or proposed specifications for WLANs, although the scope of the disclosure is not limited in this respect as they may also be suitable to transmit and/or receive communications in accordance with other techniques and standards. In some embodiments, the receiver may be configured to receive signals in accordance with the IEEE 802.16-2004, the IEEE 802.16(e) and/or IEEE 802.16(m) standards for wireless metropolitan area networks (WMANs) including variations and evolutions thereof, although the scope of the disclosure is not limited in this respect as they may also be suitable to transmit and/or receive communications in accordance with other techniques and standards. In some embodiments, the receiver may be configured to receive signals in accordance with the Universal Terrestrial Radio Access Network (UTRAN) LTE communication standards. For more information with respect to the IEEE 802.11 and IEEE 802.16 standards, please refer to "IEEE Standards for Information TechnologyTelecommunications and Information Exchange between Systems" - Local Area Networks - Specific Requirements - Part 11 "Wireless LAN Medium Access Control (MAC) and Physical Layer (PHY), ISO/IEC 8802-11: 1999", and Metropolitan Area Networks - Specific Requirements - Part 16: "Air Interface for Fixed Broadband Wireless Access Systems," May 2005 and related amendments/versions. For more information with respect to UTRAN LTE standards, see the 3rd Generation Partnership Project (3GPP) standards for UTRAN-LTE, release 8, March 2008, including variations and evolutions thereof.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims.

## Claims

1. A method for a user equipment, UE (1400), the method comprising:
receiving, from a base station (1300), higher layer signalling or an UL grant carried by a random access response, RAR, including a first indication to use either a cyclic prefix orthogonal frequency multiplexing, CP-OFDM, or discrete Fourier transform spread OFDM, DFT-s-OFDM, waveform for message 3 transmission in a random access procedure, RACH;
transmitting a message 1 that includes a random access preamble to the base station (1300) over a physical random access channel, PRACH;
receiving a message 2 that includes the random access response, RAR, from the base station (1300) in response to message 1;
transmitting a message 3 that includes an identification of the UE (1400) to the base station (1300) in response to message 2, wherein message 3 is transmitted as either a CP-OFDM or DFT-s-OFDM; and **characterized by**
receiving, from the base station (1300), radio resource control, RRC, signaling including a second indication to use either a CP-OFDM or DFT-s-OFDM waveform for uplink data transmission.

2. The method of claim 1 wherein the signal from the base station (1300) indicating which waveform to use for message 3 is included in minimum system information, MSI, remaining minimum system information, RMSI, or other system information, OSI.

3. The method of claim 1 wherein the signal from the base station (1300) indicating which waveform to use for message 3 is included in message 2.

4. The method of any of claims 1 through 3 wherein message 3 is encoded as a CP-OFDM or DFT-s-OFDM waveform with a numerology as indicated by a signal from the base station (1300).

5. The method of any of claims 1 through 3 wherein message 3 is encoded as a CP-OFDM or DFT-s-OFDM waveform with a transmission bandwidth as indicated by a signal from the base station (1300).

6. The method of any of claims 1 through 3 wherein message 3 is encoded as a CP-OFDM or DFT-s-OFDM waveform with a transmission duration as indicated by a signal from the base station (1300), wherein the transmission duration is defined with respect to starting and/or ending symbols of a physical uplink shared channel, PUSCH, that carries message 3.

7. The method of any of claims 1 through 3 further comprising:
in a memory, storing the UE's coverage status as determined by a reference signal power, RSRP, measurement or other measurement; and,
encoding an indication of the UE's coverage status as a function of a selected PRACH resource to be used to transmit message 1; and,
wherein the PRACH resource is selected for message 1 from a plurality of resources multiplexed with time division multiplexing, TDM, frequency division multiplexing, FDM, and/or code division multiplexing, CDM, from a plurality of preamble sequences, or from a combination thereof.

8. The method of claim 1, further comprising receiving a message 4 for contention resolution.

9. An apparatus for a user equipment, UE (1400), the apparatus comprising:
memory and one or more processors (1401);
wherein the one or more processors (1401) is configured to perform the method according to any of claims 1 to 8.

10. The apparatus of claim 9, further comprising:
a radio transceiver (1402) and one or more antennas (1055) connected to the one or more processors (1401).

11. A user equipment, UE (1400), comprising the apparatus of claim 9 or 10.

12. Computer-readable medium comprising instructions which, when executed by processing circuitry of a user equipment, UE (1400), cause the processing circuitry to carry out the method of any of claims 1 to 8.

## Patentansprüche

1. Verfahren für eine Benutzereinrichtung, UE (1400), wobei das Verfahren umfasst:
Empfangen, von einer Basisstation (1300), eines Higher Layer Signalling oder eines UL-Grants, übertragen durch eine Random Access Response, RAR, die eine erste Anzeige enthält, um entweder eine Cyclic Prefix Orthogonal Frequency Multiplexing-, CP-OFDM-, oder eine Discrete Fourier Transform spread-OFDM-, DFT-s-OFDM-, Wellenform für eine Message 3-Übertragung in einer Random Access Procedure, RACH, zu verwenden;
Übertragen einer Message 1, die eine Random Access-Präambel enthält, an die Basisstation (1300) über einen Physical Random Access Channel, PRACH;
Empfangen einer Message 2, die die Random Access Response, RAR, enthält, von der Basisstation (1300) als Antwort auf die Message 1;
Übertragen einer Message 3, die eine Identifikation der UE (1400) enthält, an die Basisstation (1300) als Antwort auf die Message 2, wobei die Message 3 entweder als CP-OFDM oder DFT-s-OFDM übertragen wird; und **gekennzeichnet durch**
Empfangen, von der Basisstation (1300), einer Radio Resource Control-, RRC-, Signalisierung, die eine zweite Anzeige enthält, um entweder eine CP-OFDM- oder DFT-s-OFDM-Wellenform für eine Uplink-Datenübertragung zu verwenden.

2. Verfahren nach Anspruch 1, wobei das Signal von der Basisstation (1300), das anzeigt, welche Wellenform für die Message 3 zu verwenden ist, in Minimum System Information, MSI, Remaining Minimum System Information, RMSI, oder Other System Information, OSI, enthalten ist.

3. Verfahren nach Anspruch 1, wobei das Signal von der Basisstation (1300), das anzeigt, welche Wellenform für die Message 3 zu verwenden ist, in der Message 2 enthalten ist.

4. Verfahren nach einem der Ansprüche 1 bis 3, wobei die Message 3 als eine CP-OFDM- oder DFT-s-OFDM-Wellenform mit einer Numerologie codiert ist, wie durch ein Signal von der Basisstation (1300) angezeigt.

5. Verfahren nach einem der Ansprüche 1 bis 3, wobei die Message 3 als eine CP-OFDM- oder DFT-s-OFDM-Wellenform mit einer Übertragungsbandbreite codiert ist, wie durch ein Signal von der Basisstation (1300) angezeigt.

6. Verfahren nach einem der Ansprüche 1 bis 3, wobei die Message 3 als eine CP-OFDM- oder DFT-s-OFDM-Wellenform mit einer Übertragungsdauer codiert ist, wie durch ein Signal von der Basisstation (1300) angezeigt, wobei die Übertragungsdauer in Bezug auf Start- und/oder Endsymbole eines Physical Uplink Shared Channel, PUSCH, definiert ist, der die Message 3 überträgt.

7. Verfahren nach einem der Ansprüche 1 bis 3, ferner umfassend:
Speichern des UE-Abdeckungsstatus in einem Speicher, wie durch eine Reference Signal Power-, RSRP-, Messung oder eine andere Messung bestimmt; und
Codieren einer Anzeige des UE-Abdeckungsstatus als eine Funktion einer ausgewählten PRACH-Ressource, die zum Übertragen der Message 1 zu verwenden ist; und
wobei die PRACH-Ressource für die Message 1 aus einer Mehrzahl von Ressourcen ausgewählt ist, die mit Time Division Multiplexing, TDM, Frequency Multiplexing, FDM, und/oder Code Division Multiplexing, CDM, aus einer Mehrzahl von Präambelsequenzen oder aus einer Kombination davon gemultiplext sind.

8. Verfahren nach Anspruch 1, ferner umfassend Empfangen einer Message 4 zur Konfliktauflösung.

9. Vorrichtung für eine Benutzereinrichtung, UE (1400), wobei die Vorrichtung umfasst:
einen Speicher und einen oder mehrere Prozessoren (1401);
wobei der eine oder die mehreren Prozessoren (1401) konfiguriert sind, um das Verfahren nach einem der Ansprüche 1 bis 8 durchzuführen.

10. Vorrichtung nach Anspruch 9, ferner umfassend:
einen Funksendeempfänger (1402) und eine oder mehrere Antennen (1055), die mit dem einen oder den mehreren Prozessoren (1401) verbunden sind.

11. Benutzereinrichtung, UE (1400), umfassend die Vorrichtung nach Anspruch 9 oder 10.

12. Computerlesbares Medium, umfassend Anweisungen, die bei Ausführung durch eine Verarbeitungsschaltungsanordnung einer Benutzereinrichtung, UE (1400), die Verarbeitungsschaltungsanordnung veranlassen, das Verfahren nach einem der Ansprüche 1 bis 8 auszuführen.

## Revendications

1. Un procédé pour un équipement utilisateur, UE (1400), le procédé comprenant :
la réception, depuis une station de base (1300), d'une signalisation de couche supérieure ou d'une permission UL portée par une réponse d'accès aléatoire, RAR, comportant une première indication d'utiliser une forme d'onde soit à multiplexage par répartition en fréquences orthogonales à préfixe cyclique, CP-OFDM, soit à étalement par transformée de Fourier discrète, OFDM, DFT-s-OFDM, pour une transmission de message 3 dans une procédure d'accès aléatoire, RACH ;
la transmission à la station de base (1300) d'un message 1 qui comporte un préambule d'accès aléatoire sur un canal d'accès aléatoire physique, PRACH ;
la réception d'un message 2 qui comporte la réponse d'accès aléatoire, RAR, depuis la station de base (1300) en réponse au message 1 ;
la transmission à la station de base (1300) d'un message 3 qui comporte une identification de l'UE (1400) en réponse au message 2, dans lequel le message 3 est transmis en tant qu'une forme d'onde soit à CP-OFDM soit à DFT-s-OFDM ; et
**caractérisé par**
la réception, depuis la station de base (1300), d'une signalisation de contrôle de ressources radio, RRC, comportant une deuxième indication d'utiliser une forme d'onde soit à CP-OFDM soit à DFT-s-OFDM pour une transmission de données de liaison montante.

2. Le procédé selon la revendication 1, dans lequel le signal provenant de la station de base (1300) indiquant quelle forme d'onde utiliser pour un message 3 est inclus dans une information système minimale, MSI, une information système minimale restante, RMSI, ou une autre information système, OSI.

3. Le procédé selon la revendication 1, dans lequel le signal provenant de la station de base (1300) indiquant quelle forme d'onde utiliser pour un message 3 est inclus dans un message 2.

4. Le procédé selon l'une des revendications 1 à 3, dans lequel un message 3 est codé en tant que forme d'onde soit à OFDM soit à DFT-s-OFDM avec une numérologie telle qu'indiquée par un signal provenant de la station de base (1300).

5. Le procédé selon l'une des revendications 1 à 3, dans lequel un message 3 est codé en tant que forme d'onde soit à OFDM soit à DFT-s-OFDM avec une bande passante de transmission telle qu'indiquée par un signal provenant de la station de base (1300).

6. Le procédé selon l'une des revendications 1 à 3, dans lequel un message 3 est codé en tant que forme d'onde soit à OFDM soit à DFT-s-OFDM avec une durée de transmission telle qu'indiquée par un signal provenant de la station de base (1300), dans lequel la durée de transmission est définie par rapport à des symboles de début et/ou de fin d'un canal partagé de liaison montante physique, PUSCH, qui porte un message 3.

7. Le procédé selon l'une des revendications 1 à 3, comprenant en outre :
dans une mémoire, le stockage du statut de couverture d'UE tel que déterminé par une mesure de puissance de signal de référence, RSRP, ou une autre mesure ; et
le codage d'une indication du statut de couverture d'UE en fonction d'une ressource PRACH sélectionnée à utiliser pour transmettre un message 1 ; et
dans lequel la ressource PRACH est sélectionnée pour un message 1 parmi une pluralité de ressources multiplexées avec un multiplexage par répartition dans le temps, TDM, un multiplexage à répartition de fréquence, FDM, et/ou un multiplexage par répartition de code, CDM, parmi une pluralité de séquences de préambule, ou parmi une combinaison de celles-ci.

8. Le procédé selon la revendication 1, comprenant en outre la réception d'un message 4 pour une résolution de contention.

9. Un appareil pour un équipement utilisateur, UE (1400), l'appareil comprenant :
une mémoire et un ou plusieurs processeurs (1401) ;
dans lequel les un ou plusieurs processeurs (1401) sont configurés pour réaliser le procédé selon l'une des revendications 1 à 8.

10. L'appareil selon la revendication 9, comprenant en outre :
un émetteur-récepteur radio (1402) et une ou plusieurs antennes (1055) reliés aux un ou plusieurs processeurs (1401).

11. Un équipement utilisateur, UE (1400), comprenant l'appareil selon la revendication 9 ou 10.

12. Un support lisible par calculateur comprenant des instructions qui, lorsqu'elles sont exécutées par une circuiterie de traitement d'un équipement utilisateur, UE (1400), amènent la circuiterie de traitement à réaliser le procédé selon l'une des revendications 1 à 8.
